# EUROPEAN PATENT APPLICATION

(11) **EP 4 763 591 A1**
(43) Date of publication of application: **24.06.2026**
(21) Application number: 24383404.1
(22) Date of filing: 18.12.2024
(51) Int. Cl.: B60L 53/16, B60L 53/30, B60L 53/66

(54) **CHARGING PORT DEVICE FOR AN ELECTRIC OR HYBRID VEHICLE**

(71) Applicant: Ficosa Automotive, S.L.U., 08232 Viladecavalls (ES)
(72) Inventor: MARTIN ALBARRILLA, Pablo, E08232 Viladecavalls (Barcelona) (ES); TORNE ALBERT, Adria, E08232 Viladecavalls (Barcelona) (ES)
(74) Representative: Nunez, Juan Antonio

(57) **Abstract**

The present disclosure relates to a charging port device for an electric vehicle or hybrid vehicle. The charging port device comprises a charger inlet, a support adapted for supporting the charger inlet, and a circuit board including a controller. The controller is at least configured to send and receive data related to a charging process for charging a vehicle battery. The charging port device is a one-single unit device. In this way, a reduction of electromagnetic noise is advantageously obtained.

## Description

### TECHNICAL FIELD

The present disclosure relates to a charging port device for an electric or hybrid vehicle, serving as a designated interface on the vehicle for connecting to an external power source, such as a charging infrastructure or EVSE, to charge a battery of the vehicle. The present charging port device is provided with a controller that is at least configured to send and receive data related to a charging process for charging the vehicle battery.

### BACKGROUND

A charging port device for an electric or hybrid vehicle is a designated interface on the vehicle where an external power source, such as a charging infrastructure also referred to an Electric Vehicle Supply Equipment (EVSE), connects to charge the vehicle battery. It typically consists of a connector device or charger inlet that allows the plug device from the charging infrastructure to be inserted, enabling the transfer of electric power to the vehicle battery. Also, in addition to said electric power transfer, a certain data transmission occurs between the charging infrastructure (i.e., EVSE) and the vehicle for purposes of controlling a charging process.

In electric vehicles and plug-in hybrid vehicles, the charging port device is crucial for both AC (alternating current) and DC (direct current) charging, depending on the vehicle's charging system. The charging port device may include features like covers or flaps to protect the charging port device from environmental elements when not in use. Further, the charging port device may also comprise a human machine interface (HMI), such as light signals, buttons, and the like.

In the known prior art, an electric vehicle charge controller (EVCC) is a component arranged within the vehicle and located remotely from the charging port device, being configured to manage communication between the electric or hybrid vehicle and the EVSE during the charging process.

A drawback found in prior art charging port devices is that the electric cables connecting the charging port device to the EVCC generate electromagnetic noise, which can negatively affect the performance of other external electric systems (e.g., electronic control units) arranged nearby the electric cables.

An additional drawback is the high complexity of an overall charging process architecture (including the charging port device, the EVCC, a battery management system (BMS), and an on-board charger (OBC)), particularly due to the long electric cables (i.e., harness) resulting from the remote location of the EVCC. Particularly, when said EVCC, BMS, OBC and the like are not arranged in the same location or nearby.

It would be therefore desirable to provide an improved charging port device in order to obviate the above-mentioned drawbacks and to provide advantageous solutions to the shortcomings in the prior art. The present invention further aims to reduce the number of components (e.g., cables, housings, etc.), thereby decreasing complexity, cost, and overall assembly time.

### SUMMARY

It is an object of the present invention to provide a charging port device. The charging port device is for an electric or plug-in hybrid vehicle. It is a designated interface fitted on the vehicle where a charging infrastructure, also referred to as electric vehicle supply equipment (EVSE), connects to charge the vehicle battery.

The charging port device comprises a charger inlet, a support, and a circuit board that includes a controller. In fact, the controller is attached to or coupled to the circuit board. The controller is configured to send and receive data related to a charging process for charging a vehicle battery. In this way, if the charging port device comprises the controller, a reduction of electromagnetic noise is advantageously achieved. Further, it is preferred that the controller is arranged at less than fifteen centimeters from the charger inlet. The charging port device may be a one-single unit device.

The charger inlet is a physical interface configured to establish a connection with the charging infrastructure. During the charging process, electric power transfer and data transmission pass through the charger inlet. In this way, the electric power reaches the vehicle battery, wherein the data transmission is received by the controller. Prior to the electric power transmission, data transmission pass through the charger inlet.

The charger inlet may be a socket device configured to receive a plug device. The plug device may be (an integral) part of or attached to an EV charging cable. The EV charging cable may be part of or connected to a charging infrastructure. The charging infrastructure may be part of a charging station. The plug device may not be part of the charging port device. That is, the charging port device may not comprise the charging infrastructure. Instead, the charging infrastructure may be a different system from the charging port device intended to connect to each other.

In use, when the plug device of the charging infrastructure is engaged with the charger inlet, it is defined a charging direction. That is, the charging direction is a direction where the plug device is inserted into the charger inlet (i.e., the socket device).

The support or support frame is adapted for supporting the charger inlet. The charger inlet may be an integral part of or attached to the support. The support may include an opening that gives access to the charger inlet, for example, when the charger inlet is attached to the support. In this way, the opening of the support allows engagement between the charger inlet and the plug device. It is preferred that at least a portion of the charger inlet is arranged in the opening. That is, the opening of the support at least partially surround the charger inlet.

The circuit board may be an electronics carrier such as a printed circuit board. The circuit board may be rigid or flexible (i.e., may be bended as required). In any case, the circuit board may be adapted for receiving electronic components as required. The circuit board may comprise a first surface, a second surface, and a connecting surface (i.e., peripheral edge) that connects the first and second surfaces to each other.

The charging port device, e.g., the controller, may be configured to communicate with the charging infrastructure for sending and receiving a charging infrastructure communication data with or without transmitting signals outside the charging port device other than to the charging infrastructure. The above-mentioned data transmission of the charging process may include the charging infrastructure communication data. In fact, the charging port device, e.g., the controller, may be configured to communicate with the charging infrastructure for sending and receiving the charging infrastructure communication data without sending signals outside the charging port device, other than to the charging infrastructure, at least before starting the charging process.

The charging infrastructure communication data comprises a control pilot (CP) signal. The CP signal is transmitted through a CP line. In turn, the CP signal includes at least one of a charging profile, a power delivery data, and a session control data. Other information is of course possible. The charging infrastructure communication data may preferably comprise a protective earth (PE) signal. The PE signal is transmitted through a PE line. Using a 1 kHz square wave at ±12 V between the CP and PE line provided by the charging infrastructure, the amplitude can be manipulated by the controller in order to control the charging process. It is also used as a safety function. As soon as the CP signal is interrupted, the charging process is stopped.

The CP signal is transmitted using Pulse Width Modulation (PWM). The controller is thus configured to monitor a duty cycle of the PWM signal to interpret the charging conditions and make the necessary adjustments. The CP signal usually varies in voltage, and the controller is configured to deduce different states based on the voltage levels and the modulation pattern.

The charging infrastructure communication data may also comprise a proximity pilot (PP) signal. The PP signal is transmitted through a PP line. In turn, the PP signal includes at least one of a detection of the plug device in the charger inlet (i.e., the charge cable is connected to the charging port device before the charging process), and electric current limitation. Other information is of course possible. As explained further below, when the connection is secure, the controller can proceed with the charging process. If the PP signal indicates that the plug device is not properly connected or is loose, the charging process is prevented to ensure safety.

Since the charging infrastructure communication data is not bypassed to a vehicle-integrated external system (arranged in the vehicle but located outside the present charging port device), the charging port device operates autonomously (i.e., it does not depend on external systems to receive data related to the charging process or to generate instructions for preventing disengagement between the charging infrastructure and the charging port device).

The charging port device, e.g., the controller, may be configured at least to communicate to a vehicle-integrated external system to receive data related to the vehicle battery. The vehicle-integrated external system may be arranged in the electric or hybrid vehicle and out of the charging port device. For example, the vehicle-integrated external system may be a battery management system (BMS), or an on-board charger (OBC) system. It may also be a head unit, or domain unit, or zone unit. For example, the controller may preferably be configured at least to communicate with the battery management system or to the on-board charger system to receive data related to the vehicle battery.

The charging port device may be configured to receive a battery management data. For example, the battery management data includes one or more of the following data of the vehicle battery: a state of charge (SoC), a battery voltage, a temperature data, a EV limitation (voltage limitation, current limitation, power limitation), a target current, a state of health (SoH), a cell balancing, a fault detection and safety signals, and a charging (completion) status. Other information is not ruled out such as charging schedule enabling users to set a specific start time window for the charging process.

The charging port device (e.g., the controller) may further comprise a (direct) connection with a vehicle bus communication such as a CAN bus connection. Other vehicle bus communications are of course possible such as Ethernet, LIN bus. Control pilot (CP) may also be employed when the electric power is alternate current (AC). The vehicle bus communication may be configured to transmit (e.g., send and/or receive) battery management data between the vehicle-integrated external system and the charging port device (e.g., the controller). It may occur during the charging process, but also before starting the charging process (i.e., the electric power transfer) or even after the charging process. In fact, prior to and/or during the charging process, the charging port device (e.g., the controller) is preferably connected to the battery management system via the vehicle bus communication (e.g., the CAN bus) to facilitate the flow of vital information between them. The data exchange ensures that the charging process is done safely and efficiently, taking into account the vehicle battery's current state and preventing overcharging or damage.

The charging port device may thus be configured to generate a charging port device instruction. The charging port device instruction comprises the control pilot (CP) signal. The charging port device instruction may further comprise a plug lock signal, a flap lock signal, a flap movement signal, and a human-machine interface (HMI) signal. The charging port device instruction may be based at least on the charging infrastructure communication data, and the battery management data.

The charging port device instruction via the control pilot (CP) signal may include one or more of a voltage or current amount request to be provided by the charging infrastructure, a charging start/stop command, and a reduction electric power signal. The start/stop command may preferably be generated, trigger, or emitted by the vehicle-integrated external system, or by the HMI.

It is preferred that the CP signal is transmitted utilizing PLC (power line communications). For this, a PLC transceiver may be attached to the circuit board (e.g., may be part of the controller).

The charging port device, e.g., the controller, is further configured to actuate on a locking device (i.e., a locking actuator) configured to block the engagement of the plug device of the EV charging cable and the charger inlet based at least on the charging process (based at least on the charging infrastructure communication data and/or the battery management data). In this way, the EV charging cable (e.g., the plug device) cannot be disengaged during the charging process. Particularly, the PP signal is used to control the locking device of the connector. For this, the controller generates the above-mentioned plug lock signal. It ensures that the charging connector is securely locked during charging, preventing disconnection or unauthorized removal.

The flap may remain in a closed and locked position, unless released by an instruction (i.e., the flap lock signal) from the charging port device (e.g., the controller). Upon receipt of the flap lock signal, the flap may be unlocked and allowed to move as needed. For instance, the charging port device (e.g., the controller) may receive an input indicative of a requirement to charge the vehicle battery. In response, the charging port device (e.g., the controller) generates the flap (un)lock signal to unlock the flap. Upon unlocking, the flap may be moved as required.

The charging port device may further comprise an actuator or flap actuator, or may be connected to said actuator or flap actuator. The actuator is adapted for moving a flap, according to an instruction of the controller (e.g., the flap movement signal), from an open position to a closed position (and vice versa). Other positions are of course possible such as an intermediate position. The instruction for moving the flap (e.g., the flap movement signal) depends on the charging infrastructure communication data and/or the battery management data. It is possible that the instruction for moving (and locking/unlocking) the flap depends on data received by a TCU (telecommunication control unit) of the vehicle. In any case, the flap acts as a cover that closes the charging port device (or at least the charger inlet) in the closed position. If so, it prevents the entry of dust, debris, vandalism, and other contaminants into the charging port device. Additionally, the flap protects the charger inlet from impacts and other external factors. In short, the flap may be in the closed position when the charging port device is not in use. The flap may be opened manually or automatically to the intermediate position or the open position. When opened manually, a user (e.g., a person) physically operates a mechanism to open the flap to either the intermediate position or the fully open position. Opening the flap automatically means that a motorized or automated system opens the flap through the flap actuator without human intervention. This may be triggered by the controller or by a user, which causes the flap to move to the intermediate or open position.

Further, the actuator comprises an actuator enclosure that holds the respective motor and gears of the actuator. A portion of this actuator enclosure may be an integral part of the support.

The charging port device may further comprise a back cover. The back cover may be adapted for being attached to the support and/or the actuator defining an interior space such that, in use, (i) the back cover and the support, or (ii) the back cover and the actuator enclose the circuit board (and the controller) therein. It may be that the inner space is for enclosing only the circuit board. However, it is still possible that the inner space encloses also additional components of the charging port device.

The support comprises an exterior surface, and an inner surface. The exterior surface of the support or front surface, is arranged closer (e.g., facing) to the exterior environment of the vehicle. Instead, the inner surface or back surface may face the interior of the vehicle.

It is preferred that the circuit board is fixed to (the inner surface of) the support, or fixed to the actuator. For this, the charging port device comprises an attaching system adapted for attaching the circuit board to the support (e.g., to the inner surface of the support) or, alternatively, to the actuator (e.g., to an enclosure of the actuator).

The above-mentioned charging direction, which is the direction where the plug device is inserted into the charger inlet (e.g., socket device), may be substantially perpendicular to at least one of:
- the flap in the closed position;
- an interface front surface of the charger inlet;
- a recess of the opening of the support; and
- an internal surface of the support at least partially surrounding the opening.

The front interface surface of the charger inlet is the area of the charger inlet where physical and electrical contact is made between the charging infrastructure (i.e., the plug device) and the charger inlet. This interface front surface includes the holes through which the plug may transfer electric power during the charging process, facilitating the flow of electricity from the charger to the battery of the electric vehicle.

It is preferred that the circuit board is arranged substantially perpendicular to the direction of charging (i.e., parallel to the flap in the closed position). Preferably, the circuit board may include a connector device configured to electrically connect to the charger inlet, wherein the connector device is arranged in the charging direction (i.e., the connector device attached to the circuit board includes an access opening oriented in the charging direction).The first surface or front surface of the circuit board is a surface of the circuit board arranged closer to the support, or at very least, closer to the exterior environment of the vehicle. Instead, the second surface or rear surface of the circuit board is a surface arranged further away from the support or the exterior environment of the vehicle than the first surface of the circuit board. The connector device is arranged on the above-mentioned second surface (i.e., rear surface) of the circuit board.

Alternatively, it is still possible that the circuit board may be arranged parallel to the charging direction (i.e., perpendicular to the flap in the closed position). Preferably, the circuit board may have a length that is equal to or shorter than the charger inlet and/or the actuator in the charging direction. The connecting surface (i.e., peripheral edge) of the circuit board includes a peripheral portion arranged closer to the support, or at very least, closer to the exterior environment of the vehicle.

It is preferred that the charger inlet (and e.g., the opening of the support that provides access to the charger inlet) is not positioned at the center of the support, thereby defining a first zone on one side of the support, and a second zone on an opposite side in relation to the charger inlet (and e.g., the opening of the support). Further, the first zone is larger than the second zone in a X direction, and wherein the circuit board is arranged behind the first zone. The term "behind" is according to the charging direction. The X direction is perpendicular to the charging direction. Additionally, the actuator may be arranged behind the first zone. That is, the circuit board and/or the actuator may be arranged between the first zone of the support and the back cover.

Preferably, the electrical connection of the charger inlet and circuit board or the actuator and circuit board, when it applies, may be obtained through a lead frame. If so, cables or wires may not be used for electrically connecting the charger inlet and circuit board to each other or for electrically connecting the actuator and circuit board to each other.

It is preferred that the circuit board may be arranged at least partially around the charger inlet (e.g., the opening of the support), more preferably, the circuit board may comprise a L-shape or at least a portion of O-shape. It is possible that the circuit board is partially overlapping a portion of the charger inlet (e.g., the opening of the support) in the charging direction.

### BRIEF DESCRIPTION OF THE DRAWINGS

Non-limiting examples of a charging port device will be described in the following, with reference to the appended drawings.

In the drawings:
Figure 1 is a schematic view illustrating a user interacting with an electric vehicle supply equipment (EVSE), wherein a cable of the EVSE is connected to a charging port device of an electric or pug-in hybrid vehicle;
Figure 2 is a perspective view of a non-limiting example of the charging port device showing a front portion thereof;
Figures 3 and 4 are perspective views of the charging port device of figure 2 showing a rear portion thereof;
Figure 5 is a perspective view of figure 4 without a back cover that protects a circuit board that includes a controller, allowing the circuit board and controller to be viewable;
Figure 6 is a rear view of the charging port device of figure 2, showing the rear portion thereof;
Figure 7 is a rear view of the charging port device of figure 2, showing the front portion thereof with the flap in an open position;
Figure 8 is a perspective view of a non-limiting example of the charging port device without a back cover that protects a circuit board that includes a controller, allowing the circuit board and the controller to be viewable, and wherein the circuit board is arranged perpendicular to its position in figure 5;
Figure 9 is an exploded view of figure 2;

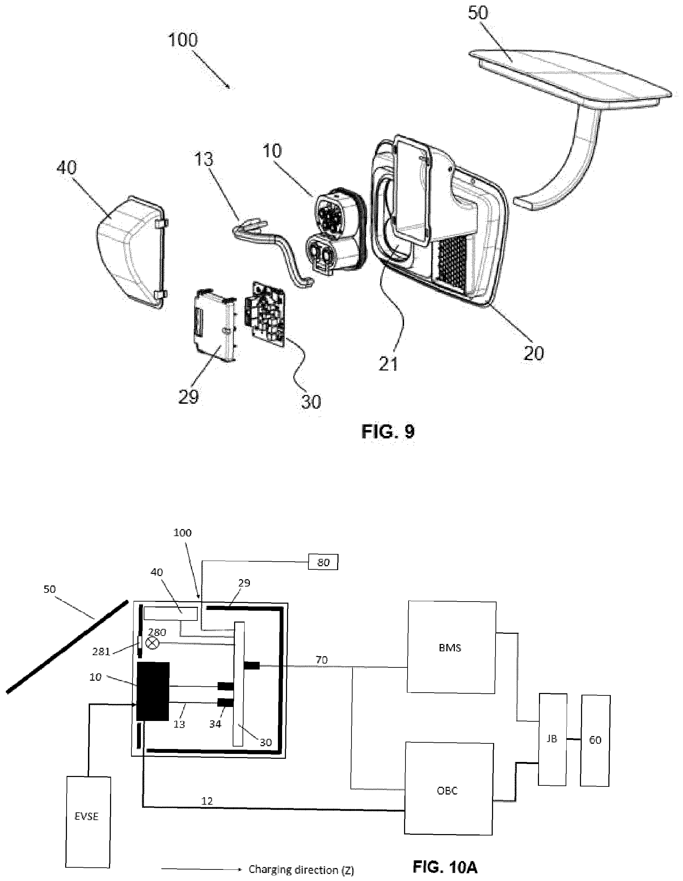

Figure 10A is a schematic illustration showing the circuit board and the controller being part of the present charging port device, wherein the cable of the EVSE is engaged with the charging port device, the charging port device communicates with the EVSE at least before a charging process. The EVSE supplies electric power to the charging port device during the charging process, the electric power being transmitted to a vehicle battery through an on-board charger (OBC), wherein the charging port device communicates to a battery management system (BMS) to receive data related to the vehicle battery;
Figure 10B is a schematic illustration similar to figure 10A, where, in the example of Figure 10A, the EVSE supplies AC power to the charging port device, which transfers it to the OBC. The OBC then transfers the electric power to the junction box, which subsequently transfers it to the vehicle battery. Instead, in the example of figure 10B, the EVSE supplies DC power to the charging port device, which transfers it to the junction box, and from there, the electric power is transferred to the vehicle battery;
Figure 11 is a schematic illustration similar to figure 10A, particularly showing that the circuit board is arranged perpendicular to a charging direction;
Figure 12 is a schematic illustration similar to figure 11, but particularly showing that the circuit board being arranged parallel to the charging direction; and
Figure 13 is a schematic illustration similar to figure 12, but particularly showing that the circuit board is shorter than the charger inlet in the charging direction, and a connector device is arranged in the surface of the circuit board facing away the charger inlet.

### DETAILED DESCRIPTION OF EXAMPLES

With reference to the non-limiting examples shown in the figures of the drawings, a charging port device 100 for an electric or plug-in hybrid vehicle is described herein.

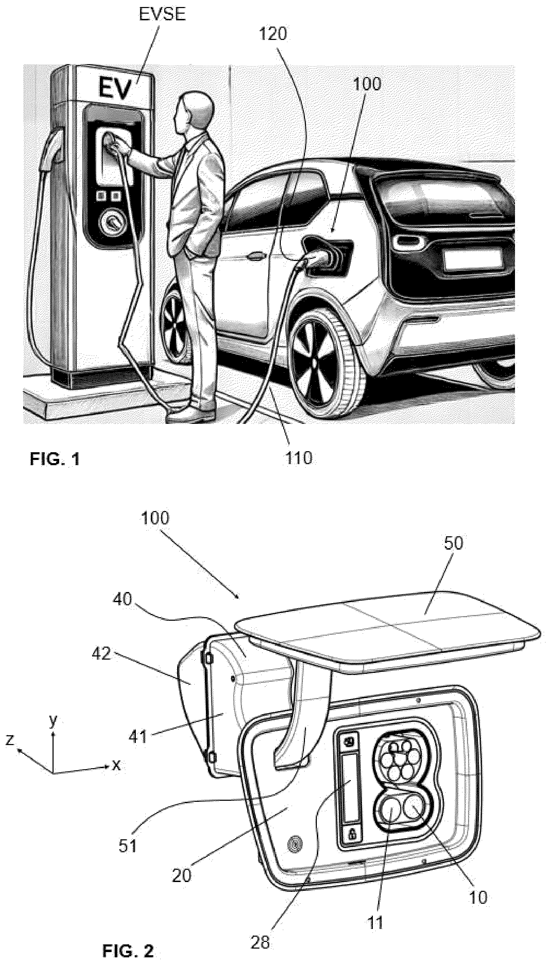

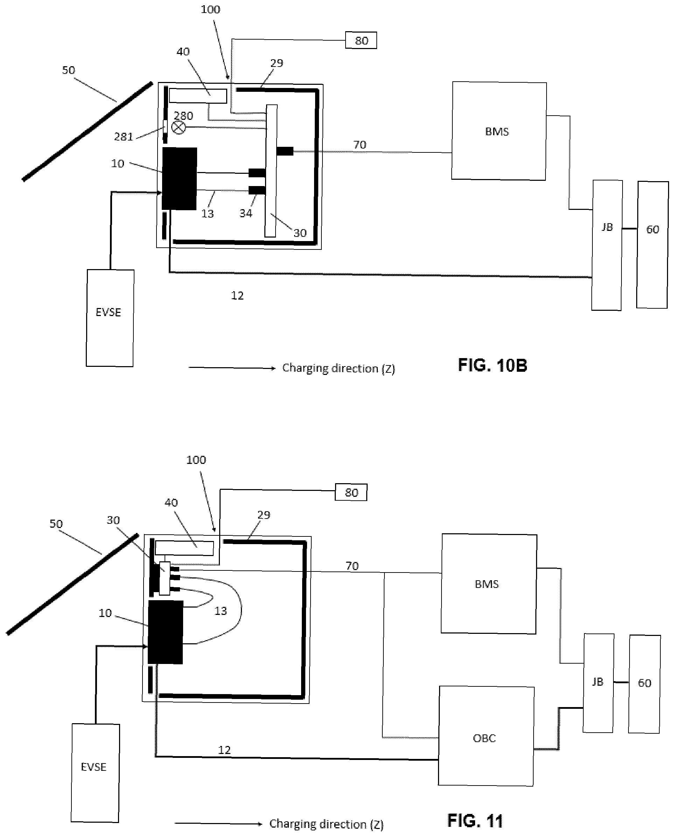

Figure 1 illustrates a charging infrastructure or electric vehicle supply equipment EVSE electrically connected to an electric or plug-in hybrid vehicle through a charging cable 110. In particular, the charging cable 110 is part of or attached to the EVSE and is engaged with a charging port device 100. More in particular, the charging cable 110 includes a plug device 120 adapted for engaging a charger inlet 10 (see figures 2-9) of the charging port device 100 as explained further below. During a charging process, the EVSE transfers electric power to the charging port device 100 that, in turn, transfers it to a vehicle battery 60 (see figures 10 to 13). The vehicle battery 60 stores the electric power. In use, the electric power will be supplied to the electric motor of the vehicle (not shown) for moving the wheels of the vehicle as required (not shown).

The electric or plug-in hybrid vehicle comprises the charging port device 100, the vehicle battery 60, a junction box, a battery management system BMS, and an on-board charger OBC (see figures 10 to 13). The BMS is an electronic system that manages and monitors performance of the vehicle battery 60, ensuring safe and efficient operation. Specifically, the BMS controls the charging process by regulating factors like voltage, current, temperature, and state of charge (SOC) during power transfer (i.e., charging process) from the EVSE to the vehicle battery 60. It protects the vehicle battery 60 from overcharging, deep discharge, and overheating, ensuring longevity and safety of the vehicle battery 60. The OBC is an integral component of an electric vehicle that converts alternate current (AC) power from the EVSE into direct current (DC) power required to charge the vehicle battery 60. It allows the vehicle battery 60 to be charged using standard charging infrastructure (or a charging infrastructure supplying AC power) without needing an external converter. It manages the charging process by controlling the power flow to the battery and ensuring the correct voltage and current for safe and efficient charging. The OBC also communicates with the BMS to optimize the vehicle battery's charging and prevent damage during the charging process.

Figures 2-9 show an example of a charging port device 100 that comprises a charger inlet 10, a support 20 with an opening 21 (see particularly figure 9) providing access to the charger inlet 10, and a flap 50 in the open position. As shown, the charger inlet 10 is intended to be located in the opening 21.

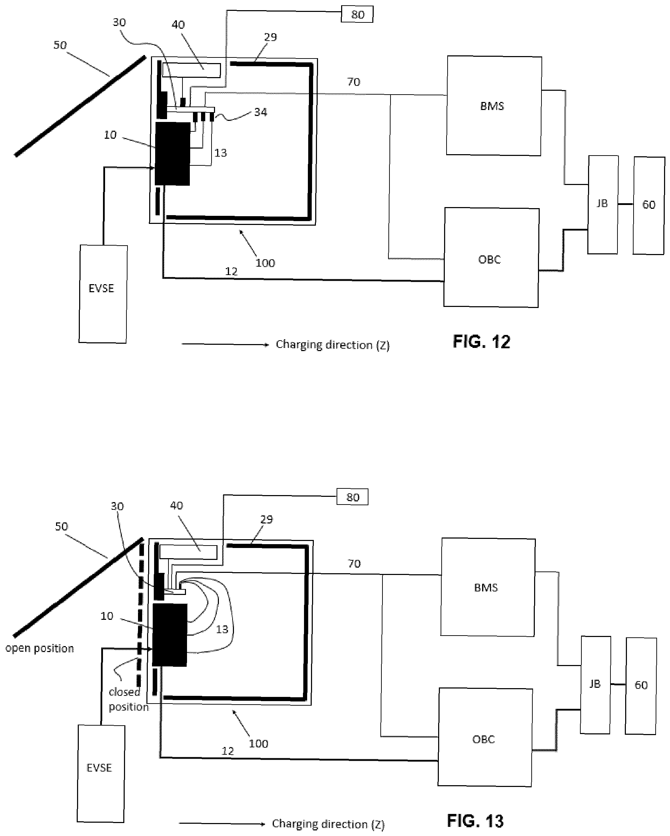

Figures 2-9 further depict an actuator 40 adapted to move the flap 50 at least from an open position to a closed position (see figure 13 in dashed line). In examples, (an exterior surface of) the flap 50 in the closed position is substantially flush with (an exterior surface of) a chassis of the vehicle. In examples, the flap 50 is in the closed position when the charging port device 100 is not in use. In this way, the flap 50 acts as a cover that closes the opening 21 of the support 20 in the closed position, thereby preventing the entry of dust, debris, vandalism, sprayed water, and other contaminants into the charging port device 100, as well as protecting the charger inlet 10 from impacts and other external factors. When the charging process is not expected, the flap 50 may be not only in the closed position but also locked.

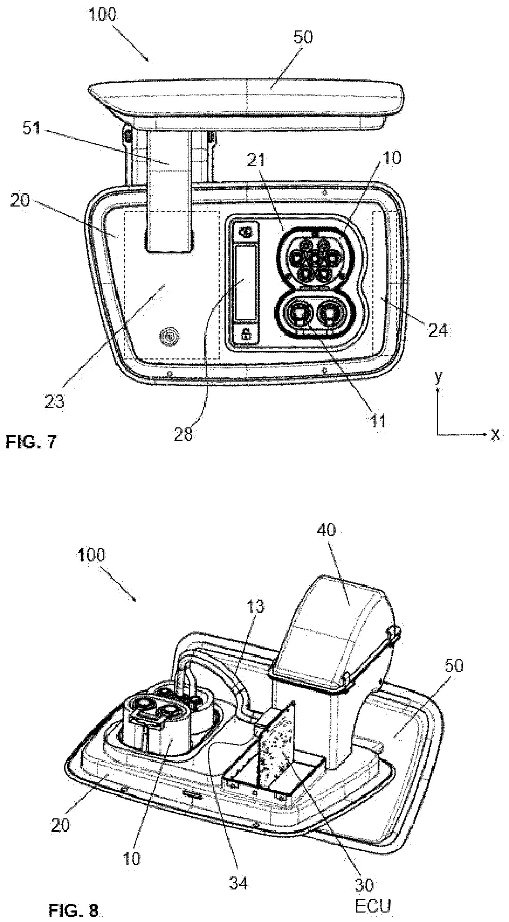

Figures 2 and 7 show a front portion of the charging port device 100. When the flap 50 is in the open position, the EVSE can be electrically connected to the charging port device 100. In particular, the charging inlet 10 includes an interface front surface comprising orifices 11 adapted for receiving a portion of the pug device 120 as required. That is, the charger inlet 10 is a socket device being configured to engage with the plug device 120. A charging direction Z is defined as a direction of the plug device 120 being inserted into the charger inlet 10.

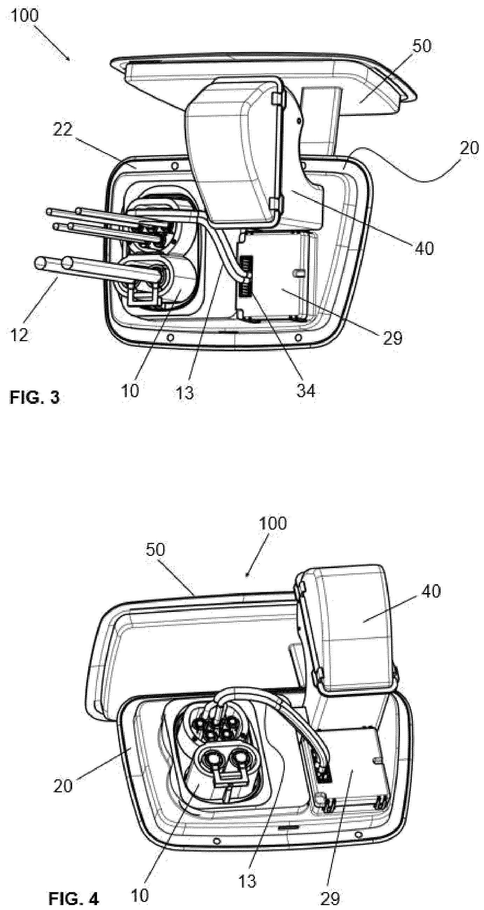

Figure 3 shows a rear portion of the charging port device 100. In particular, (a rear portion of) the charging inlet 10 comprises or is (directly) connected to two types of cables: the inlet power cables 12, and the inlet control cable 13. The inlet power cables 12 come out from the charging port device 100 to supply (high-voltage) electric power to the vehicle battery 60. In particular, the inlet power cables 12 receive electric power from the EVSE (e.g., the plug device 120) and transfer it to the vehicle battery 60.

If the electric power is AC power, the inlet power cables 12 transmit the AC power to the OBC that converts the AC power from the EVSE into DC power required to charge the vehicle battery 60. If the electric power is DC power, the inlet power cables 12 transmit the DC power to the vehicle battery 60. Intermediate components or devices may be provided between the charging port device 100 and the vehicle battery 60. For example, as illustrated in figures 10A to 13, the junction box JB is provided between the BMS and the vehicle battery 60, such that the JB receives electric power and transmits it to the vehicle battery 60, with the BMS being connected to the JB. The junction box JB is configured to receive the electric power (directly) from the OBC (when the EVSE supplies AC power as in the example of figure 10A) or from the charging port device 100 (when the EVSE supplies DC power as in the example of figure 10B). As shown in figure 2, the inlet control cables 13 electrically connect the charging inlet 10 and a circuit board 30 to each other. The inlet control cables 13 comprises a plurality of lines (CP, PE, PP) as explained further below.

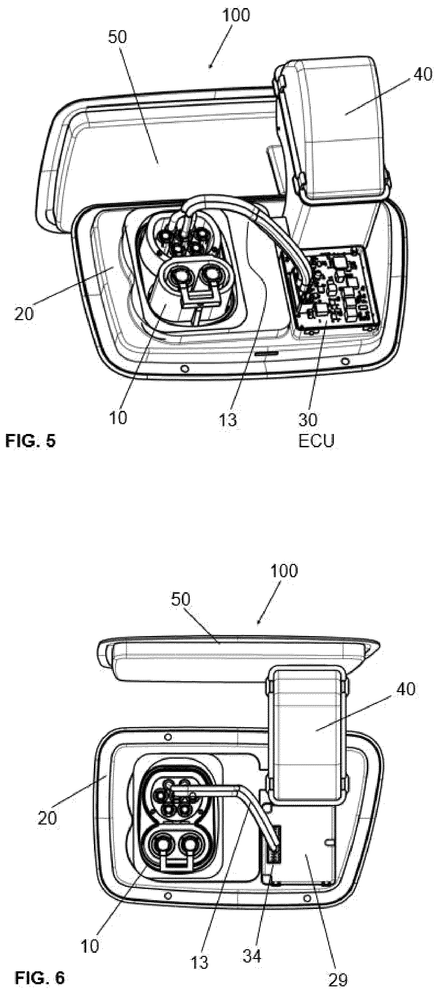

Figures 5, 8 and 9 show that the charging port device 100 further comprises the circuit board 30 including a controller ECU. Particularly, the charging port device 100 is a one-single unit device that includes the circuit board 30 and the ECU. The ECU is configured to send and receive data related to the charging process for charging a vehicle battery 60. In examples, the circuit board 30 (e.g., the ECU) is arranged at less than fifteen centimeters from the charger inlet 10. It reduces the negative effects of the electromagnetic waves (EMCs). Moreover, the complexity of an assembly process is also reduced. Furthermore, accessibility for repairs and inspections is further improved.

A "single unit device" should be understood herein as a unified assembly, with no relative movement between its individual components, even though some of these components may be capable of relative motion with respect to the assembly, such as flap 50 when moving between the closed and open positions, and the internal elements of the flap actuator 40 or the locking device. In this context, the "single unit device" refers to a portable device that can be installed as a complete, integrated unit.

As shown, the charging port device 100, e.g., the ECU, is configured to communicate with the EVSE for sending and receiving a charging infrastructure communication data without the need for transmitting signals outside the charging port device 100, other than the EVSE, at least before starting the charging process. The charging infrastructure communication data comprises a control pilot (CP) signal, a proximity pilot (PP) signal, and a protective earth (PE) signal. In turn, the CP signal may include one or more of a charging profile, a power delivery data, and a session control data.

As shown in figures 10-13, the charging port device 100, e.g., the ECU, is at least configured to communicate with a vehicle-integrated external system to receive data related to a vehicle battery 60. The vehicle-integrated external system is arranged in the electric or hybrid vehicle and out of the charging port device 100. Particularly, the vehicle-integrated external system is the BMS, or the OBC. More in particular, the charging port device 100, e.g., the ECU, is connected to the BMS and the OBC via a vehicle communication bus 70 like a CAN bus. It ensures a safe and efficient charging process of the vehicle battery 60. The BMS plays a crucial role in managing the vehicle battery's health, safety, and performance, and it provides critical information to the charging port device 100, e.g., the ECU, before and during the charging process.

In other words, the charging port device 100 comprises a direct connection with a vehicle bus communication 70 such as CAN bus for transmitting battery management data. The vehicle bus communication 70 allows connection of the charging port device 100 to the BMS and/or OBC. In this way, the charging port device 100, e.g., the ECU, is configured to receive a battery management data from the BMS or the OBC.

The battery management data comprises one or more of the following information of the vehicle battery: (i) state of charge (SOC); (ii) vehicle battery voltage; (iii) temperature information; (iv) state of health (SOH) of the vehicle battery; (v) charging limitations; (vi) target current; (vii) charge termination; (viii) fault conditions; (ix) cell balancing, and (x) charging schedule. The charging limitations may include: voltage limitation, current limitation, and/or power limitation.

The SOC helps the charging port device 100 (e.g., the ECU) determine how much charge the vehicle battery 60 requires and allows it to adjust the charging rate accordingly. For example, if the vehicle battery 60 is near full, the charging rate may need to be reduced to avoid overcharging. For the voltage level, the BMS continuously monitors the voltage and communicates it to the charging port device 100 (e.g., the ECU) to ensure that the voltage remains within safe limits during charging. The charging port device 100 (e.g., the ECU) will adjust its output to align with the vehicle battery's voltage range. The BMS monitors the temperature of the vehicle battery 60, as temperature extremes (either too high or too low) can affect the charging process. High temperatures, in particular, may lead to overheating and battery damage. The charging port device 100 (e.g., the ECU) needs this temperature information to adjust the charging current or halt charging if necessary to protect the vehicle battery 60. The SOH refers to the vehicle battery's ability to hold charge and maintain performance over time. If the BMS detects that the vehicle battery's health is degraded, it may limit the charging current or inform the charging port device 100 (e.g., the ECU) to charge more conservatively to prevent further damage. The BMS specifies the maximum allowable current for the charging process based on the vehicle battery's specifications and current state. This prevents the charging port device 100 (e.g., the ECU) from providing more current than the battery can safely handle, thus avoiding overcharging, overheating, or other potential risks. The BMS is responsible for determining when charging should terminate based on factors such as the vehicle battery 60 reaching full charge, reaching a certain temperature threshold, or when a fault condition is detected. The charging port device 100 (e.g., the ECU) relies on the BMS to provide this information and stop the charging process when necessary. If the BMS detects any issues, such as overvoltage, undervoltage, or abnormal temperature conditions, it will communicate these faults to the charging port device 100 (e.g., the ECU). The charging port device 100 (e.g., the ECU) is configured to respond accordingly, for example, by shutting down or reducing the charging rate to prevent damage. In cases where the BMS manages cell balancing (ensuring all individual battery cells are charged evenly), it may communicate to the charging port device 100 (e.g., the ECU) whether cell balancing is required or in progress, which can impact the charging process (e.g., may limit the charging rate).

In short, the communication between the charging port device 100 (e.g., the ECU) and the BMS is vital for ensuring that the charging process is optimized for the vehicle battery's current state, health, and safety. The vehicle communication bus 70 (e.g., CAN bus) facilitates real-time exchange of battery management data, allowing the charging port device 100 (e.g., the ECU) to adjust the charging parameters as necessary and ensure that charging occurs within the vehicle battery's safe operational limits.

As explained before, the charger inlet 10 is connected to the circuit board 30. In particular, it is shown in figures 3-6 and 8 that the inlet control cable 13 comes out from the charger inlet 10 to electrically connect to the ECU through a connector device 34. The inlet control cable 13 is configured to send and receive the charging infrastructure communication data. Therefore, the charging infrastructure communication data includes functional signals used for communication and safety between the charging port device 100 and the EVSE. These signals are important for the proper operation and safety of the charging process. The inlet control cable 13 comprises a first inlet control line, a second inlet control line, and a third inlet control line.

In examples, the first inlet control line is configured to transmit the CP signal to the ECU. It provides information about the EVSE status, including whether it is ready to charge, whether charging can begin, and the maximum current available for charging. It is a PWM (pulse-width modulation) signal that the electric or hybrid vehicle uses to adjust its charging current based on the capabilities of the EVSE.

In examples, the second inlet control line is configured to transmit a PE signal. The PE signal is used for safety and ensures that an overall vehicle's charging system is properly grounded. It helps protect the user and the vehicle from electric shocks by providing a safe path for any stray electrical currents. The PE connection may be made through the earth/ground wire, which connects the electric or hybrid vehicle to the ground during the charging process.

In examples, the third inlet control line is configured to transmit a PP signal. The PP signal is used to detect the presence of the charging cable and its connection status. It provides information to the EVSE and the vehicle about whether the plug device 120 is inserted properly and whether the charging process can proceed. This PP signal helps ensure that the charging process begins only when everything is properly connected and safe. In this way, plug locking information is transmitted for the purpose of locking the plug device 120. In this way, the plug device 120 cannot be unplugged during the charging process. As explained above, the ECU is configured to generate the instruction for activating the locking device that locks the plug device 120, for example, based at least on the above-mentioned charging infrastructure communication data and/or battery management data. Particularly, said locking device is a plug lock actuator being a different actuator from the flap actuator 40.

Further, the ECU is configured to generate an instruction for activating a locking device to lock the plug device 120 in the charger inlet 10. The (third) inlet control cable 13 is configured to transmit said instruction for the purpose of activating the locking device to lock the plug device 120 based at least on the charging infrastructure communication data, and/or the battery management data.

As shown in figures 2 and 7, the (front portion of the) the charging port device 100 comprises a user interface 28. The user interface 28 or HMI (Human-Machine Interface) allows the user to control and monitor the operation (e.g., charging process) of the charging port device 100 through a user-friendly interface. The user interface 28 optionally generates colored light for the purpose of indicating a status of the charging process. For example, the user interface 28 uses at least one or more of blue, green, red, yellow, orange, and white color. The user interface 28 may generate flashing lights. Blue color may indicate that the charging is in progress. Green color may indicate that the charging process is completed. Red color may indicate an error or fault. Yellow color may indicate a warning or charging at reduced rate. Orange color may indicate charging in progress, but with attention needed.

As schematically illustrated by figures 10A and 10B, the charging port device 100, e.g., the ECU, generates a light instruction to a light source 280. The light source 280 may include a LED (Light Emitting Diode) configured to produce light in a variety of colors based on the light instruction. The light instruction is generated based at least from the above-mentioned charging infrastructure communication data and/or battery management data. A user interface cable is further provided to electrically connect the circuit board 30 and the light source 280 to each other. As illustrated, the (front portion of the) charging port device 100 comprises a translucid medium 281 placed in front of the light source 280, allowing light emitted by the light source to pass through. It ensures that the produced light is a light indicator visible to the user without being too concentrated, improving thus the overall user experience and readability of the user interface 28. The user interface 28 may comprise buttons, which allow the user to interact with and control the charging process, such as initiating or stopping the charging process, selecting charging process modes, or configuring settings. The inclusion of buttons provides a manual interface for user control, offering flexibility and ease of use.

The charging port device 100, e.g., the ECU, is also configured to control the locking and unlocking status of the flap 50. In examples, the flap 50 is in a closed and locked position. The charging port device 100 (e.g., the controller) receives an input indicative of a requirement to charge the vehicle battery 60. In response, it generates the flap unlock signal to unlock the flap 50. Upon unlocking, the flap 50 may be moved as required.

The charging port device 100, e.g., the ECU, is also configured to control the opening and closing of the flap 50. For this, the ECU generates an instruction for activating the actuator 40 that moves the flap 50 from the open position to the close position, for example, based on the above-mentioned charging infrastructure communication data and/or battery management data. In examples, a flap cable is further provided. The flap cable is configured to transmit the generated flap instruction from the circuit board 30 to the flap actuator 40. In this way, the charging port device 100 is configured to open or close the flap 50 depending at least on the charging infrastructure communication data and/or battery management data. Figures 2 and 7 show a flap arm 52 attached to or being an integral part of the flap 50 such that, in use, the actuator 40 is capable of moving the flap 50 as required.

Figure 2 shows that the actuator 40 comprises a first enclosure part 41 and a second enclosure part 42 that, in use, form an interior space therein suitable for receiving an actuator mechanism (not shown). The first enclosure part 41 may be an integral part of or attached to the support 20. In examples, the actuator 40 is part of the charging port device 100 as a single unit (i.e., the actuator 40 is integrated into the charging port device 100 as a single, unified assembly).

Figures 5 and 7 show that the circuit board 30 is fixed to an inner surface 22 of the support 20, or fixed to the actuator 40. As depicted, the circuit board 30 is arranged substantially perpendicular to the charging direction Z (e.g., parallel to the flap 50 in the closed position). If so, figures 3, 6 and 8 illustrate that the circuit board 30 includes a connector device 34 configured to electrically connect to the charger inlet 10. In particular, figures 3 and 6 depict that the connector device 34 is arranged on a rear surface of the circuit board 50. The rear surface of the circuit board 50 is the surface of the circuit board 50 arranged furthest away from the support 20. The connector device 34 has an access opening to receive the inlet control cable 13. In this way, the charger inlet 10 and the circuit board 30 are electrically connected to each other. Further, the connector device 34 is parallel to the charging direction Z (e.g., perpendicular to the flap 50 in the closed position). In particular, the access opening of the connector device 34 faces a rear direction according to the charging direction Z.

Figure 8 shows that the circuit board 30 is arranged parallel to the charging direction Z (e.g., perpendicular to the flap 50 in the closed position). As illustrated in figure 12, the circuit board 30 has a length in the charging direction Z that is equal to or shorter than the actuator 40. Figure 13 illustrates that the circuit board 30 has a length in the charging direction Z that is equal to or shorter than the charger inlet 10. For example, figure 12 schematically illustrates that one, two or more connector devices 34 are attached to a surface of the circuit board 30 facing the charger inlet 10. Instead, figure 13 schematically illustrates that one, two or more connector devices 34 are attached to a surface of the circuit board 30 facing away the charger inlet 10 (i.e., in the opposite surface as the connector devices 34 are coupled to the circuit board in figure 12). It is advantageous that the connector device 34 is arranged at the surface of the circuit board 30 facing the charger inlet 10 since the electrical connection through the control cables 13 is easier to obtain from an assembly point of view. However, if the circuit board 30 is shorter than the charger inlet 10 in the charging direction Z as illustrated in figure 13, then the connector device 34 may be arranged at the surface of the circuit board 30 facing away the charger inlet 10, the inlet control cable 13 extending over the circuit board 30 (at the side) to connect the charger inlet 10 and the connector device 34.

Figure 7 shows that the charger inlet 10 (e.g., the opening 21) is not positioned at the center of the support 20, thereby defining a first zone 23 on one side of the support 20, and a second zone 24 on an opposite side in relation to the charger inlet 10 (e.g., opening 21) (shown in figure 9) so that the first zone 23 is larger than the second zone 24 in a X direction. In particular, the actuator 40 is arranged behind the first zone 23. "Behind" is referred herein in accordance with the charging direction Z direction (see figure 2). The X direction is perpendicular to the charging direction Z. In examples, the circuit board 30 is arranged behind the first zone 23. Further, the actuator 40 is arranged behind the first zone 23.

Figures 10A and 10B illustrate the circuit board 30 is arranged inside a housing assembly of the charging port device 100. In particular, figures 3, 4, 6 and 9 show that the housing assembly comprises the above-mentioned support 20 and a back cover 29. The back cover 29 is adapted for being attached to the support 20 and/or the actuator 40 defining an interior space such that, in use, the back cover 29 and the support 20 enclose the circuit board 30 therein. In simple words, at least a portion of the support and/or the actuator acts as an enclosure of the circuit board 30.

The housing or enclosure for protecting the charger inlet 10 and the housing or enclosure of the circuit board 30 is unified, such that the charger inlet 10 does not have a separate housing distinct from that of the circuit board 30. Instead, the support 20 and the back cover 29 serve as a common enclosure for defining the inner space so as to receive the charger inlet 10 and the circuit board 30 therein. Reduction of parts and complexity is thus achieved.

As shown in figures 10A-13, the ECU is supplied with electrical energy, for example, by a low-voltage power source 80.

In examples, the electrical connection of the charger inlet 10 and circuit board 30 is obtained through a lead frame (not shown).

Moreover, the circuit board 20 is arranged at least partially around the charger inlet 10 (e.g., the opening 21), particularly, the circuit board 20 comprises a L-shape or at least a portion of O-shape (not shown).

Unlike the charging port devices of the prior art, the present charging port device includes the ECU, providing the following advantages:
- Reduction of EMCs: Reduction of parasitic inductance and conducted emissions, due to the reduced number of harnesses. The data transmitted by the harness in the prior art to the EVCC uses high frequencies (e.g., 3 to 30 MHz), which are highly detrimental to other electronic systems.
- Simplification/optimization of the electric system architecture for charging (and discharging) of the vehicle: Improvements to the harness architecture around the vehicle, enhancing the interaction between the various components involved in the charging process.
- Reduction of system components: Utilization of the support 20 as part of the housing for supporting and protecting the ECU, reducing the number of separate system elements (e.g., housing part).
- Easier software updates: particularly useful when evolving communication protocols or adapting to new charging standards. As the ECU is dedicated to managing communication between the vehicle and the charging infrastructure ESVE, updates can be rolled out to improve charging protocols, integrate new features, or fix issues in a very easy manner.
- Modular design: the present invention provides an enhanced modular design. Various countries may have different legislations, regulations, and protocols governing electric vehicle charging systems. For example, the charger inlet may vary from country to country. Further, the EVCC is typically arranged remotely from the charging port device in the prior art. The configuration of the present charging port device allows for a fundamental, optimized design that is adaptable to any market and vehicle type. By employing the appropriate charger inlet and deploying the required functionalities within the ECU as needed, the present invention provides one-single charging port device that eliminates the need for significant modifications or additional assembly processes, ensuring a versatile and efficient solution.

Although only a number of examples of the present electronic device and assembly method thereof have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. Reference signs related to drawings placed in parentheses in a claim are solely for attempting to increase the intelligibility of the claim, and shall not be construed as limiting the scope of the claim.

## Claims

1. A charging port device (100) for an electric or hybrid vehicle, the charging port device (100) comprising:
- a charger inlet (10);
- a support (20) adapted for supporting the charger inlet (10); and
- a circuit board (30) including a controller (ECU),
wherein the charging port device (100) is a one-single unit device, and
wherein the controller (ECU) is configured to send and receive data related to a charging process for charging a vehicle battery (60).

2. The charging port device of claim 1, wherein it is configured to communicate with a charging infrastructure (EVSE) for sending and receiving a charging infrastructure communication data without the need for sending signals outside the charging port device (100) other than to the charging infrastructure (EVSE) at least before starting the charging process.

3. The charging port device of claim 2, wherein the charging infrastructure communication data comprises a control pilot (CP) signal, and preferably a protective earth (PE) signal and/or a proximity pilot (PP) signal, for example, the control pilot (CP) signal comprises at least one of: a charging profile, a power delivery data, and a session control data.

4. The charging port device of any preceding claim, wherein it is configured at least to communicate with a vehicle-integrated external system to receive data related to a vehicle battery (60), the vehicle-integrated external system being arranged in the electric or hybrid vehicle and out of the charging port device (100).

5. The charging port device of claim 4, wherein the vehicle-integrated external system is a battery management system (BMS) or an on-board charger system (OBC), and wherein the charging port device (100) is configured to receive a battery management data, for example, the battery management data includes one or more of: a state of charge (SoC), a battery voltage, a temperature data, EV limitation, a target current, a state of health (SoH), a cell balancing, a fault detection and safety signals, and a charging completion status.

6. The charging port device of any preceding claim, wherein it comprises a connection with a vehicle bus communication (70) for transmitting battery management data, optionally, the vehicle bus communication (70) is a CAN bus.

7. The charging port device of any preceding claim, wherein it is configured to generate a charging port device instruction that comprises one or more of the following signals: the control pilot (CP) signal, a flap lock signal, a flap movement signal, a plug lock signal, and a human-machine interface (HMI) signal, and wherein the charging port device instruction is based at least on the charging infrastructure communication data, and the battery management data.

8. The charging port device of any preceding claim, wherein it further comprises an actuator (40) that moves a flap (50), according to an instruction of the controller (ECU), from an open position to a closed position, optionally, based at least on the charging infrastructure communication data and/or the battery management data.

9. The charging port device of claim 8, wherein the circuit board (30) is fixed to the support (20), or fixed to the actuator (40).

10. The charging port device of any preceding claim, wherein the circuit board (30) is arranged substantially parallel to the flap (50) in the closed position.

11. The charging port device of claim 10, wherein the circuit board (30) includes a connector device (34) configured to electrically connect to the charger inlet (10), wherein the connector device (34) is arranged perpendicular to the flap (50) in the closed position, and wherein the connector device (34) is arranged on a rear surface of the circuit board (50) which is the surface arranged furthest away from the support (20)

12. The charging port device of claims 1-9, wherein the circuit board (30) is arranged perpendicular to the flap (50) in the closed position, optionally, the circuit board (30) has a length that is equal to or shorter than the charger inlet (10) and/or the actuator (40) in a charging direction (Z), wherein the charging direction (Z) is the direction where a plug device (120) of the charging infrastructure (EVSE) is inserted into charger inlet (10).

13. The charging port device of any preceding claim, wherein the charger inlet (10) is not positioned at the center of the support (20), thereby defining a first zone (23) on one side of the support (20), and a second zone (24) on an opposite side in relation to the charger inlet (10) so that the first zone (23) is larger than the second zone (24) in a X direction, wherein the X direction is perpendicular to the charging direction (Z), and wherein the circuit board (30) is arranged behind the first zone (23), optionally, the actuator (40) is arranged behind the first zone (23).

14. The charging port device of any preceding claim, wherein it further comprises a back cover (29) adapted for being attached to the support (20) and/or the actuator (40) defining an interior space such that, in use, the back cover (29) and the support (20), and/or the back cover (29) and the actuator (40) enclose the circuit board (30) therein.

15. The charging port device of any preceding claim, wherein the circuit board (20) is arranged at least partially around the charger inlet (10), optionally, the circuit board (20) comprises a L-shape or at least a portion of O-shape.
